# EUROPÄISCHE PATENTSCHRIFT

(11) **EP 3 385 506 B1**
(45) Veröffentlichungstag und Bekanntmachung des Hinweises auf die Patenterteilung: **30.10.2019**
(21) Anmeldenummer: 17165617.6
(22) Anmeldetag: 07.04.2017
(51) Int. Cl.: F01D 11/00

(54) **DICHTUNGSANORDNUNG FÜR EINE GASTURBINE**
SEALING ARRANGEMENT FOR A GAS TURBINE ENGINE
AGENCEMENT D'ÉTANCHÉITÉ POUR TURBINE À GAZ

(43) Veröffentlichungstag der Anmeldung: 10.10.2018
(73) Patentinhaber: MTU Aero Engines AG, 80995 München (DE)
(72) Erfinder: BÖCK, Alexander, 82288 Kottgeisering (DE)

(56) Entgegenhaltungen:
- DE-A1- 3 708 949
- GB-A- 510 505
- GB-A- 2 087 501
- US-A- 5 848 874

## Beschreibung

Die vorliegende Erfindung betrifft eine Dichtungsanordnung gemäß Anspruch 1.

In Gasturbinen, insbesondere Fluggasturbinen, ist es erforderlich, dass statische Bauteile abgedichtet werden, die großen thermischen Schwankungen unterliegen und entsprechend auch bedeutende thermisch induzierte Verschiebungen bzw. Bewegungen aufweisen. Herkömmlicherweise werden solche Abdichtungen durch sogenannte Dichtplatten erreicht, die über einen in der Gasturbine vorhandenen Druckunterschied an einer Dichtstelle gegen entsprechende Dichtflächen gedrückt werden. Dabei ist zu beachten, dass ein Abstand zwischen den Dichtflächen in der Regel ziemlich groß ist, um bei gleichzeitiger Dichtwirkung auch die thermomechanischen Deformationen aufnehmen zu können. Insbesondere ist der Abstand zwischen den Dichtflächen größer als eine maximal erwartbare Verschiebung der Bauteile relativ zueinander aufgrund der thermischen Einflüsse. Entsprechend müssen die Dichtflächen, an denen die Dichtplatten anliegen relativ groß gewählt werden, um in jedem (Betriebs-)Zustand der Gasturbine die gewünschte Abdichtung zu erreichen.

Ein Beispiel für eine Dichtungsanordnung für eine Gasturbine ist aus der GB2087501A bekannt.

Aufgabe der Erfindung ist es, eine verbesserte Dichtungsanordnung vorzusehen, bei der eine Abdichtung auch bei großen Verschiebungen zuverlässig bereitgestellt werden kann.

Zur Lösung dieser Aufgabe wird vorgeschlagen, dass das Dichtungselement einen am ersten Bauteil, insbesondere am Verrundungsabschnitt anliegenden ersten Dichtungsabschnitt und einen am zweiten Bauteil, insbesondere am zweiten Flanschabschnitt anliegenden zweiten Dichtungsabschnitt aufweist, wobei der erste Dichtungsabschnitt und der zweite Dichtungsabschnitt miteinander verbunden sind und geneigt zueinander angeordnet sind.

Durch eine geneigte Anordnung der beiden Dichtungsabschnitte kann auf eine vollflächige Anlage an Dichtflächen wie bei bekannten Dichtplatten verzichtet werden. Entsprechend kann die Dichtfläche, also der Bereich, in dem die Dichtungsabschnitte an den beiden Bauteilen, insbesondere dem Verrundungsabschnitt und dem zweiten Flanschabschnitt anliegen, reduziert werden, so dass die Dichtungsanordnung insgesamt reduziert werden kann.

Das Dichtungselement kann relativ zum ersten Bauteil und relativ zum zweiten Bauteil verschiebbar sein. Durch die relative Verschiebbarkeit können Bewegungen der Bauteile aufgrund thermischer Einwirkung ausgeglichen werden bei Beibehaltung der Dichtwirkung.

Das Dichtungselement weist einen sich an den zweiten Dichtungsabschnitt anschließenden Kopplungsabschnitt auf, wobei im Kopplungsabschnitt eine Öffnung vorgesehen ist, durch die ein Schaft eines Bolzens der Schraubverbindung hindurchgeführt ist. Dabei kann der Schaft des Bolzens einen Sicherungsabschnitt aufweisen, der einen größeren Durchmesser als der Schaft aufweist, derart, dass eine Bewegung des Dichtungselements entlang der Längsrichtung des Schafts nur eingeschränkt möglich ist. Ferner kann die Öffnung als Langloch ausgebildet sein. Dabei kann das Langloch derart bemessen sein, dass das Dichtungselement in Abhängigkeit des veränderlichen Abstands oder des entsprechenden abzudichtenden Spalts zwischen dem ersten Flanschabschnitt und dem zweiten Flanschabschnitt verschiebbar ist.

Durch eine derartige Ausgestaltung des Kopplungsabschnitts mit Öffnung kann das Dichtungselement in einfacher Weise an dem Schaft eines Schraubbolzens angeordnet werden und beim Zusammenschrauben der beiden Flanschabschnitte in eine Einbauposition gebracht werden. Der Sicherungsabschnitt kann eine Art Manschette oder Hülse sein. Dabei kann ein Halteabschnitt des Sicherungsabschnitts für das Dichtungselement als eine Art Anschlag dienen, um das Dichtungselement sicher in Position zu halten. Das Langloch ermöglicht die Bewegung des Dichtungselements relativ zum Schaft bzw. relativ zum Sicherungsabschnitt und somit auch relativ zu den beiden Bauteilen.

In anderen Ausführungsformen kann die Öffnung auch beliebige andere Formen aufweisen und größer als der Querschnitt des Bolzens sein. Dies gestattet ebenfalls die vorgenannte Verschiebbarkeit.

Die Dichtungsanordnung kann ferner ein Federelement umfassen, das dazu eingerichtet ist, den ersten Dichtungsabschnitt und den zweiten Dichtungsabschnitt in Richtung des ersten Bauteils bzw. Flanschabschnitts und des zweiten Bauteils bzw. Flanschabschnitts zu drücken. Dabei kann das Federelement eine Öffnung aufweisen, insbesondere in Form eines Langlochs, durch die der Schaft des Bolzens der Schraubverbindung hindurchgeführt ist. Ferner wird vorgeschlagen, dass das Federelement zwischen dem Sicherungsabschnitt des Schafts und dem Dichtungselement angeordnet ist.

Das Dichtungselement wird, wie die herkömmlichen Dichtplatten, aufgrund von Druckunterschieden gegen die Flanschabschnitte gedrückt. Um eine Abdichtung aber auch bei geringen Druckunterschieden bzw. im Stillstand der Gasturbine sicherstellen zu können, kann das F e-derelement eingesetzt werden. Das Federelement ist dabei so ausgeführt, dass es in Richtung der abzudichtenden Stelle vorgespannt ist, so dass es auf das Dichtungselement eine entsprechende Druckkraft ausübt.

Das Federelement kann dabei am ersten Flanschabschnitt oder am zweiten Flanschabschnitt sowie am Sicherungsabschnitt des Schafts abgestützt sein. Durch diese Lagerung des Federelements können die auf das Dichtungselement ausgeübten Kräfte optimal in die umgebende Struktur der Bauteile abgeleitet werden.

Der erste Dichtungsabschnitt und der zweite Dichtungsabschnitt können im Wesentlichen V-förmig zueinander angeordnet sein, insbesondere einen Winkel bilden, der vorzugsweise zwischen etwa 60° und 120°, besonders bevorzugt etwa zwischen 80° und 110° liegt.
Dabei können der erste Dichtungsabschnitt und der zweite Dichtungsabschnitt durch einen gebogenen Verbindungsabschnitt verbunden sein, wobei der Verbindungsabschnitt in Richtung zu dem ersten Flanschabschnitt oder dem zweiten Flanschabschnitt hin konvex ausgebildet ist. Es wird insbesondere vorgeschlagen, dass eine konvexe Seite des Verbindungsabschnitt einem geringeren Druck im Betrieb der Gasturbine ausgesetzt ist, als die komplementäre konkave Seite des Verbindungsabschnitts. Der gebogene Verbindungsabschnitt ermöglicht auch einer elastische Auslenkung der beiden Dichtungsabschnitte zueinander, so dass die Dichtungsabschnitte sich in jedem Betriebszustand der Gasturbine bzw. in jeder Relativstellung der beiden Bauteile zueinander eine optimale Position einnehmen können.

Die Erfindung betrifft ferner auch eine Gasturbine, insbesondere Fluggasturbine, mit einem Turbinenzwischengehäuse, wobei die Gasturbine entlang der Umfangsrichtung mehrere oben beschriebene Dichtungsanordnungen umfasst, wobei das erste Bauteil einer Dichtungsanordnung ein Gehäusebauteil ist und wobei das zweite Bauteil der betreffenden Dichtungsanordnung ein Teil des Turbinenzwischengehäuses ist, insbesondere ein Panel oder Fairing des Turbinenzwischengehäuses.

Bei einer solchen Gasturbine kann in einem Übergangsbereich von jeweils zwei Dichtungsanordnungen, die in Umfangsrichtung benachbart zueinander angeordnet sind und im Bereich einer Überlappung von zwei benachbarten Bauteilen des Turbinenzwischengehäuses angeordnet sind, wenigstens ein weiteres Dichtungselement, insbesondere ein dem Profil des Dichtungselements angepasster Dichtkörper angeordnet sein.

Der Dichtkörper und die betreffenden Dichtungselemente der benachbarten Dichtungsanordnungen können in Axialrichtung wenigstens teilweise überlappend angeordnet sein.

Durch die Kombination von zwei benachbarten Dichtungsanordnungen mit ihren jeweiligen Dichtungselementen und einem zusätzliche Dichtkörper können Stoßbereiche von Bauteilen im Bereich des Turbinenzwischengehäuses einfach und gut abgedichtet werden.

In Bezug auf die Gasturbine sind Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Es wird noch darauf hingewiesen, dass das erste Bauteil und das zweite Bauteil aus einem keramischen Faserverbundwerkstoff (CMC) hergestellt sein können. Das Dichtungselement und das Federelement sind bevorzugt aus einem Metall hergestellt.

Nachfolgend wird die Erfindung unter Bezugnahme auf die anliegenden Figuren beispielhaft und nicht einschränkend beschrieben.
Fig. 1 zeigt in einer schematischen und vereinfachten Perspektivdarstellung zwei benachbarte Dichtungselemente einer Dichtungsanordnung mit optional zugehörigen Federelementen und einem Dichtkörper an einer Stoßstelle der beiden Dichtungselemente.
Fig. 2 zeigt in einer schematischen und vereinfachten Draufsicht in Axialrichtung eine zur Fig. 1 ähnliche Darstellung einer Dichtungsanordnung mit Dichtungselementen, optional zugehörigen Federelementen und Dichtkörpern.
Fig. 3 zeigt eine Dichtungsanordnung in einer schematischen und vereinfachten Schnittdarstellung etwa entlang einer Schnittlinie III-III der Fig. 2.
Fig. 4 zeigt die Schnittdarstellung der Dichtungsanordnung der Fig. 3 in einer weiter vereinfachten Prinzipdarstellung, wobei in den Teilfiguren A) bis C) unterschiedliche Relativstellungen von Bauteilen an der Dichtstelle illustriert sind.
Fig. 5 zeigt in einer vereinfachten und schematischen Schnittdarstellung einen temporären Zustand, wenn ein Dichtungselement mit optionalem Federelement mittels eines Bolzens am betreffenden Bauteil angeordnet wird.

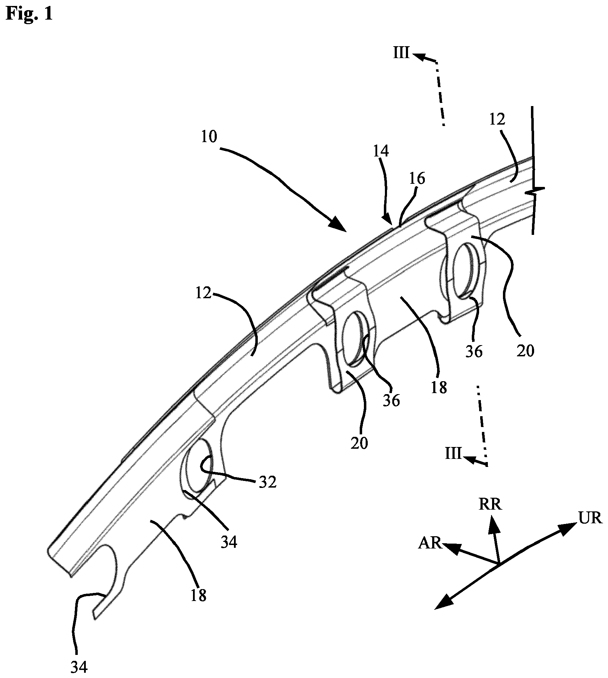

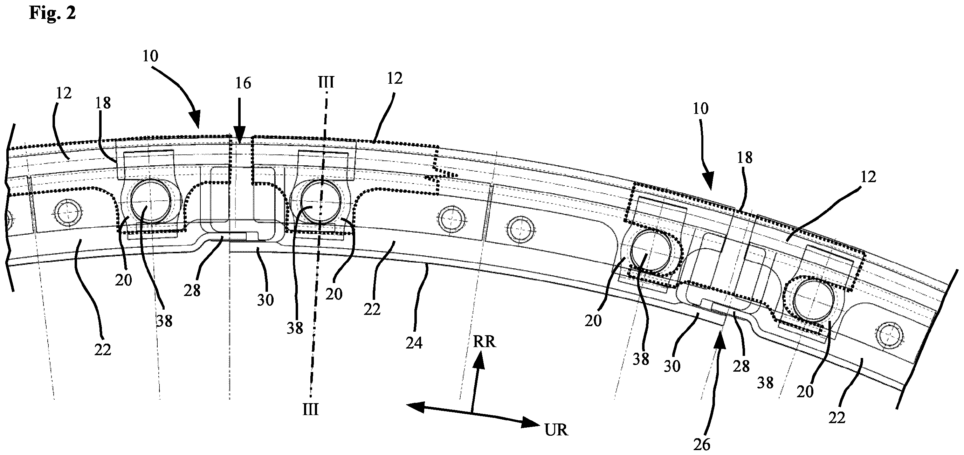

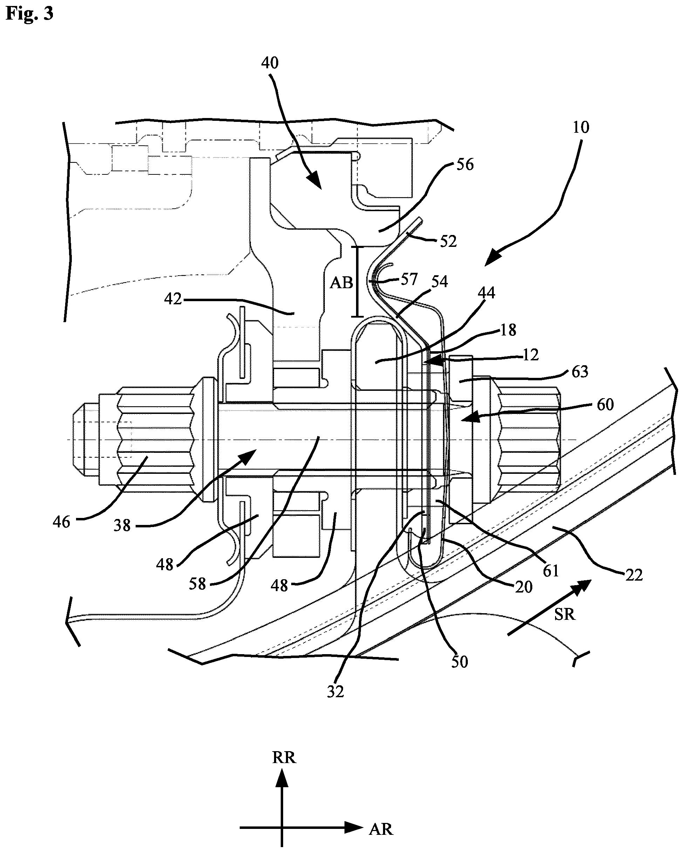

Fig. 1 zeigt in einer vereinfachten und schematischen Perspektivdarstellung zwei Dichtungselemente 12, die Teil einer jeweiligen in den Fig. 2 und 3 genauer dargestellten Dichtungsanordnung 10 sind. Die Dichtungselemente 12 sind entlang einer Umfangsrichtung UR einer hier nicht weiter dargestellten Gasturbine, insbesondere Fluggasturbine, nebeneinander angeordnet. Zwischen zwei benachbarten Dichtungselementen 12 ist eine Stoßstelle 14 ausgebildet. An dieser Stoßstelle 14 ist zwischen den beiden Dichtungselementen 12, insbesondere aufgrund einer überlappenden Anordnung von Bauteilen der Gasturbine, insbesondere von Bauteilen eines Turbinenzwischengehäuses, ein Abstand 16 ausgebildet. Dieser Abstand 16 wird durch einen Dichtkörper 18 abgedeckt bzw. überbrückt. In der Fig. 1 sind ferner optional für die Dichtungsanordnung 10 einsetzbare Federelemente 20 dargestellt, die dazu eingerichtet sind, das jeweilige Dichtungselement 12 in Richtung einer abzudichtenden Stelle zu drücken.

Fig. 2 zeigt eine zur Fig. 1 ähnliche Darstellung in einer Draufsicht in Axialrichtung AR einer Gasturbine. In der Fig. 2 sind jeweilige Bauteile 22 der betreffenden Dichtungsanordnung ersichtlich. Die Bauteile 22 können Bauteile eines Turbinenzwischengehäuses sein, insbesondere sogenannte Fairings oder Panels, die in Umfangsrichtung nebeneinander angeordnet sind. Diese Bauteile werden in dieser Anmeldung, insbesondere in den Ansprüchen und später unter Bezugnahme auf die Fig. 3 auch als zweite Bauteile angesprochen.

In Radialrichtung RR innen begrenzen die zweiten Bauteile 22 einen Heißgas führenden Kanal, was durch das Bezugszeichen 24 angedeutet ist. In Radialrichtung wir der Kanal 24 am Übergang zwischen zwei zweiten Bauteilen 22 durch einen Überlappungsbereich 26 abgedichtet. Dabei überlagern sich ein radial äußerer Überlappungsabschnitt 28 des einen zweiten Bauteils 22 und ein radial innerer Überlappungsabschnitt 30 des benachbarten (anderen) zweiten Bauteils.

Aus der Fig. 2 ist ferner auch der Abstand 16 ersichtlich im Stoßbereich der beiden Dichtungsanordnungen 10 bzw. deren Dichtungselementen 12. Wie bereits unter Bezugnahme auf die Fig. 1 erläutert, wird dieser Abstand bzw. Zwischenraum 16 durch einen weiteren Dichtkörper 18 abgedeckt. Ferner sind ebenfalls die optionalen Federelemente 20 ersichtlich, die dazu eingerichtet sind, die jeweiligen Dichtungselemente 12 insbesondere in Axialrichtung gegen eine Dichtstelle zu drücken.

Bezogen auf die Axialrichtung, die in Fig. 2 orthogonal zur Zeichnungsebene liegt, sind j e-weils ein Federelement 20, ein Dichtkörper 18 und ein Dichtungselement 12 hinter- bzw. nebeneinander angeordnet. Aus rein darstellerischen Gründen zur Verbesserung der Verständlichkeit der Zeichnung sind in der Fig. 2 oberhalb des linken Überlappungsbereichs 26 die beiden Dichtungselemente 12 durch eine dicker gestrichelte Linie (Kontur) hervorgehoben. Beim rechten Überlappungsbereich 26 ist die Kontur des Dichtkörpers 18 dicker gestrichelt dargestellt.

Ein jeweiliges Dichtungselement 12, der zugehörige Teil des Dichtkörpers 18 und ein optionales Federelement 20 weisen jeweilige Öffnungen 32, 34 und 36 auf, was insbesondere auch aus der Fig. 1 ersichtlich ist. Die Öffnung 32 eines Dichtelements 12 ist dabei kreisförmig oder langlochförmig ausgebildet. Auch die Öffnung 36 eines Federelements 20 kann kreisförmig oder langlochförmig ausgebildet sein. Die Öffnung 34 des Dichtkörpers 18 ist insbesondere U-förmig ausgebildet und in Umfangsrichtung einseitig offen. Durch alle Öffnungen 32, 34, 36 geht im zusammengesetzten Zustand der Dichtungsanordnungen 10 jeweils ein Bolzen 38 hindurch.

Die Dichtungsanordnung 10 wird nun in Bezug auf die Schnittdarstellung der Fig. 3 weiter erläutert, wobei der Schnitt etwa entsprechend den Schnittlinien III-III der Fig. 1 und Fig. 2 gewählt ist.

Aus der Schnittdarstellung ist in einem oberen Bereich der Figur 3, der hier beispielhaft einen radial äußeren Bereich einer Gasturbine, insbesondere Fluggasturbine, zeigt, ein erstes Bauteil 40 mit einem ersten Flanschabschnitt 42 ersichtlich. Das erste Bauteil 40 ist insbesondere ein Gehäusebauteil der Gasturbine. Ferner umfasst die Dichtungsanordnung 10 ein zweites Bauteil 22 mit einem zweiten Flanschabschnitt 44. Das zweite Bauteil 22 ist insbesondere ein Teil eines Turbinenzwischengehäuses, etwa ein Fairing oder ein Panel. Durch die beiden Flanschabschnitte 42, 44 ist der Bolzen 38 hindurch geführt. Der Bolzen 38 ist insbesondere ein Schraubbolzen, auf den eine Mutter 46 aufgeschraubt ist, so dass das erste Bauteil 40 und das zweite Bauteil 22 miteinander lösbar verbunden werden können bzw. verbunden sind.

Die Verbindung zwischen dem ersten Bauteil 40 und dem zweiten Bauteil 22 umfasst entlang des Bolzens 38 noch weitere scheibenartige oder ringartige oder hülsenartige Elemente, die zusammenfassend und vereinfacht mit dem Bezugszeichen 48 gekennzeichnet sind.

Zwischen dem ersten Bauteil 40 und dem zweiten Bauteil 22 ist ein Abstand oder ein abzudichtender Spalt AB vorgesehen bzw. vorhanden. Der Abstand AB ist in der Fig. 3 beispielhaft in Radialrichtung RR eingezeichnet. Der Abstand könnte aber auch geneigt zur Radialrichtung RR zwischen dem ersten Flanschabschnitt 42 und dem zweiten Flanschabschnitt 44 eingezeichnet werden. Der Abstand AB muss in einer Strömungsmaschine, wie einer Gasturbine, insbesondere Fluggasturbine abgedichtet werden, wobei zu beachten ist, dass sich das erste Bauteil 40 und das zweite Bauteil 22 relativ zueinander bewegen aufgrund thermischer Einflüsse von Heißgas, das die Gasturbine durchströmt. Im vorliegenden Beispiel begrenzt das zweite Bauteil 22 nach radial innen einen Heißgas führenden Ringkanal, wobei das Heißgas im Wesentlichen entlang einer Richtung strömt, die durch einen Doppelpfeil SR angedeutet ist.

Zur Überdeckung bzw. Abdichtung des Abstandes bzw. Spalts AB umfasst die Dichtungsanordnung 10 das Dichtungselement 12. Das Dichtungselement 12 weist einen Kopplungsabschnitt 50 auf. Im Kopplungsabschnitt 50 ist die Öffnung 32 vorgesehen, durch die der Bolzen 38 hindurchgeht. Das Dichtungselement 12 umfasst ferner einen ersten Dichtungsabschnitt 52 und einen zweiten Dichtungsabschnitt 54. Der erste Dichtungsabschnitt 52 liegt am ersten Bauteil 40 an. Insbesondere liegt er an einem Verrundungsabschnitt 56 an Der zweite Dichtungsabschnitt 54 liegt am zweiten Bauteil 22, insbesondere am zweiten Flanschabschnitt 44 an. Das Dichtungselement 12 behindert bzw. verhindert also mit seinen beiden Dichtungsabschnitten 52, 54 das Durchströmen von Fluid durch den zwischen dem ersten Bauteil 40 und dem zweiten Bauteil 22 gebildeten Abstand AB.

Der erste Dichtungsabschnitt 52 und der zweite Dichtungsabschnitt 54 sind geneigt zueinander angeordnet. Wie aus der Schnittdarstellung der Fig. 3 ersichtlich, ist das Dichtungselement 12 im Bereich der beiden Dichtungsabschnitte 52, 54 V-förmig ausgebildet. Der erste Dichtungsabschnitt 52 und der zweite Dichtungsabschnitt 54 sind über einen gebogenen bzw. gekrümmten Verbindungsabschnitt 57 miteinander verbunden. Sie bilden dabei einen Winkel, von zwischen etwa 60° und 120°, besonders bevorzugt etwa zwischen 80° und 110°. Im dargestellten Beispiel stehen der erste Dichtungsabschnitt 52 und der zweite Dichtungsabschnitt im Wesentlichen orthogonal zueinander, d.h. sie schließen einen Winkel von etwa 90° ein. Die Winkelangaben beziehen sich insbesondere auf eine Stellung der Dichtungsabschnitte 52, 54 zueinander in einem ruhenden Betriebszustand einer Gasturbine (kalter Zustand). Es ist klar, dass sich die Winkellage aufgrund der sich verändernden Druckverhältnisse oder/und der sich verändernden Temperaturverhältnisse im Betrieb der Gasturbine etwas verändern kann. Hierdurch kann dann beispielsweise ein Winkel von ursprünglich 90° beispielsweise etwas größer oder kleiner werden.

Die beiden Dichtungsabschnitte 52, 54 werden üblicherweise alleine durch den Druckunterschied gegen das erste Bauteil 40 bzw. das zweite Bauteil 22 gedrückt. Im vorliegenden Beispiel herrscht bezogen auf die Fig. 3 im Betrieb der Gasturbine auf der linken Seite, also der dem ersten Flanschabschnitt 42 zugewandten Seite des Dichtungselements 12 ein geringerer Druck als auf der rechten Seite. Aufgrund dieses Druckunterschieds werden die V-förmig zueinander ausgebildeten Dichtungsabschnitte 52, 54 gegen die beiden Bauteile 40, 22 gepresst, insbesondere gegen den zweiten Flanschabschnitt 44 und gegen den Verrundungsabschnitt 56, der dem ersten Bauteil 40 zugeordnet ist. In der Fig. 3 ist ferner auch der Dichtkörper 18 sichtbar, der das Dichtungselement 12 in Axialrichtung überlappt.

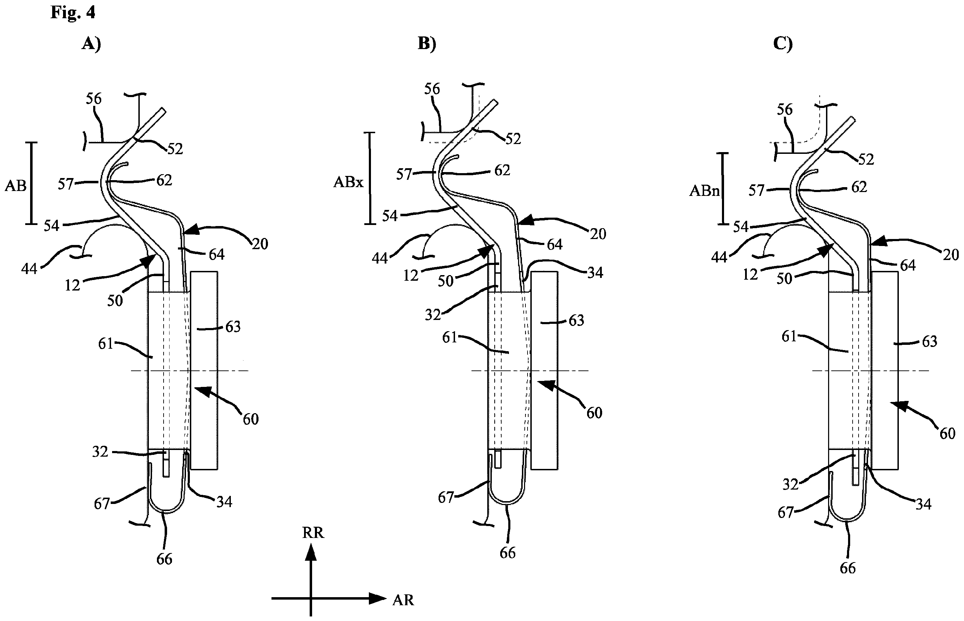

Unter Bezugnahme auf die Fig. 4 wird nachfolgend die Anbringung des Dichtungselements 12 an dem Bolzen 38 erläutert werden. Ferner wird auch die Funktion des optionalen Federelements 20, das auch in der Fig. 3 dargestellt ist, genauer beschrieben. Die Darstellungen in Fig. 4 sind verglichen mit der Schnittdarstellung der Fig. 3 stark vereinfacht und es sind nur die für die Funktionsbeschreibung relevanten Bauteile dargestellt.

In Fig. 4 ist für das erste Bauteil 40 stellvertretend ein Teil des Verrundungsabschnitts 56 dargestellt. Für das zweite Bauteil 22 ist noch ein Teil des zweiten Flanschabschnitts 44 ersichtlich. zwischen dem ersten Bauteil 40 und dem zweiten Bauteil 22 bzw. zwischen dem Verrundungsabschnitt 56 und dem zweiten Flanschabschnitt 44 ist der Abstand AB eingezeichnet. Teilfigur A) zeigt eine relative Mittellage der beiden Bauteile 40, 22 zueinander. Ausgehend von dieser Mittellage sind in den Teilfiguren B) und C) relative Endlagen der beiden Bauteile 40, 22 zueinander dargestellt, wobei in Teilfigur B) ein maximaler Abstand ABx vorhanden ist und in Teilfigur C) ein minimaler Abstand ABn. Durch die geneigte Anordnung der beiden Dichtungsabschnitte 52, 54 zueinander, kann der sich verändernde Abstand AB, ABx, ABn zuverlässig überbrückt und abgedichtet werden.

Damit das Dichtungselement 12 sich dem verändernden Abstand AB, ABx, ABn in seiner Relativlage zum Bolzen 38 bzw. den Bauteilen 40, 22 anpassen kann, ist die Öffnung 32 im Kopplungsabschnitt 50 länglich bzw. als Langloch ausgeführt. Das Dichtungselement 12 ist an einem Sicherungsabschnitt 60 angeordnet. Der Sicherungsabschnitt 60 ist eine Art Manschette oder Hülse, die den Bolzen umgibt. Der Sicherungsabschnitt 60 kann als ein vom Bolzen 38 bzw. von dessen Schaft 58 gesondertes Teil ausgeführt sein, das am Schaft 58 verschiebbar aufgenommen sein kann. Dabei weist der Sicherungsabschnitt 60 einen Kopplungsabschnitt 61 und einen Halteabschnitt 63 auf. Der Kopplungsabschnitt 61 weist einen größeren Durchmesser auf als der Schaft 58 des Bolzens 38. Der Halteabschnitt 63 weist einen etwas größeren Durchmesser als der Kopplungsabschnitt 61 auf. Der Sicherungsabschnitt 60 kann also auch als pilzförmig beschrieben werden, wobei der Kopplungsabschnitt 61 den Stiel bildet und der Halteabschnitt 63 den Hut.

Der Durchmesser der Öffnung 32 des Dichtungselements 12 ist in Radialrichtung RR etwas größer ist als der Durchmesser des Kopplungsabschnitts 61 des Sicherungsabschnitts 60. Der Halteabschnitt 63 weist einen größeren Durchmesser als die Öffnung 32 auf. Durch den Sicherungsabschnitt 60 bzw. den Kopplungsabschnitt 61 und den Halteabschnitt 63 ist das Dichtungselement 12 in seiner Relativbewegung in Axialrichtung AR begrenzt. Hierdurch kann verhindert werden, dass sich das Dichtungselement 12 trotz seiner relativen Beweglichkeit unerwünscht weit weg von der abzudichtenden Stelle entfernen kann, so dass die gewünschte Dichtwirkung negativ beeinträchtigt wird. Das Dichtungselement 12 ist somit in Axialrichtung AR zwischen dem Halteabschnitt 63 und dem zweiten Bauteil 22 bzw. dem zweiten Flanschabschnitt 44 aufgenommen.

In der Fig. 4 ist auch das optionale Federelement 20 dargestellt. Das Federelement 20 weist eine in Radialrichtung RR längliche bzw. als Langloch ausgebildete Öffnung 34 auf. Das Federelement 20 umfasst einen Druckabschnitt 62, einen Verbindungsabschnitt 64 und einen Stützabschnitt 66 auf. Der Stützabschnitt 66 ist u-förmig gebogen, so dass das Federelement 20 mit einem Schenkel 67 des U-förmigen Stützabschnitts am zweiten Flanschabschnitt anliegt. Ferner liegt das Federelement 20 mit seinem Verbindungsabschnitt 64, in dem auch die Öffnung 64 vorgesehen ist, am Sicherungsabschnitt 60, insbesondere am Halteabschnitt 63 an. Der Verbindungsabschnitt 64 weist eine leicht gebogene bzw. geknickte Form auf, derart, dass er in Richtung der abzudichtenden Bauteile 40, 22 leicht konkav ausgebildet ist (siehe insbesondere Fig. 4 A) und B). Mit seiner konvexen Seite stützt sich das Federelement 20 am Halteabschnitt 63 des Sicherungsabschnitts 60 ab. Der Druckabschnitt 62 ist zum Dichtungselement 12, insbesondere zu dessen Verbindungsabschnitt 57 hin konvex ausgebildet. Das Federelement 20 ist dazu eingerichtet, das Dichtungselement 12, insbesondere dessen Dichtungsabschnitte 52, 54 gegen das erste Bauteil 40 bzw. das zweite Bauteil 22, insbesondere gegen den Verrundungsabschnitt56 bzw. den zweiten Flanschabschnitt 44 zu drücken. Die entsprechende elastische Vorspannkraft wird dabei insbesondere dadurch aufgebracht, dass das Federelement 20, insbesondere dessen Verbindungsabschnitt 64 zum Dichtungselement 12 hin geknickt bzw. gebogen ist.

In jeder Relativposition der beiden Bauteile 44, 20 zueinander und einer entsprechenden Lage des Dichtungselements 12, wie dies in den Fig. A) bis C) dargestellt ist, nimmt das Federelement 20 ebenfalls eine veränderte Relativstellung ein. Ferner wird das Federelement 20 bei geringerem Abstand ABn (Fig. 4C) entgegen der Vorspannkraft elastisch verformt, insbesondere etwas aufgebogen. Der Stützabschnitt 66, insbesondere dessen Schenkel 67 bleibt dabei in jeder Relativposition des Federelements 20 in Kontakt mit dem zweiten Bauteil 22, bzw. dessen zweiten Flanschabschnitt 44.

In Axialrichtung AR ist das Federelement 20 zwischen dem Halteabschnitt 63 des Sicherungsabschnitts 60 des Bolzens 38 und dem Dichtungselement 12 aufgenommen. Das Dichtungselement 12 ist in Axialrichtung AR zwischen dem Federelement 20 und dem zweiten Flanschabschnitt 44 angeordnet. Somit kann durch das Federelement 20 in jedem Betriebszustand der Gasturbine und entsprechend in jeder Relativstellung der Bauteile 44, 20 zueinander ein ausreichender, gegebenenfalls zusätzlicher Druck (zum herrschenden Druckunterschied des umgebenden Fluids) auf das Dichtungselement 12 ausgeübt werden, um die gewünschte Abdichtung im Bereich des Abstands AB zu erreichen bzw. zu verstärken. Das Federelement 12 stellt auch sicher, dass das Dichtungselement 12 bei geringem Druckunterschied auf die abzudichtende Stell zwischen den beiden Bauteilen 40, 22 gedrückt wird.

Es wird darauf hingewiesen, dass die Dichtungsanordnung 10 nicht zwingend ein Federelement 20 aufweisen muss. Die Funktion der Abdichtung kann auch durch ein Dichtungselement 12 ohne zugeordnetes Federelement 20 erreicht werden. Insoweit könnte man sich beispielsweise in der Fig. 4 das Federelement 20 einfach wegdenken, ohne dass hierdurch die Funktionsweise des Dichtungselements 12 verändert wird.

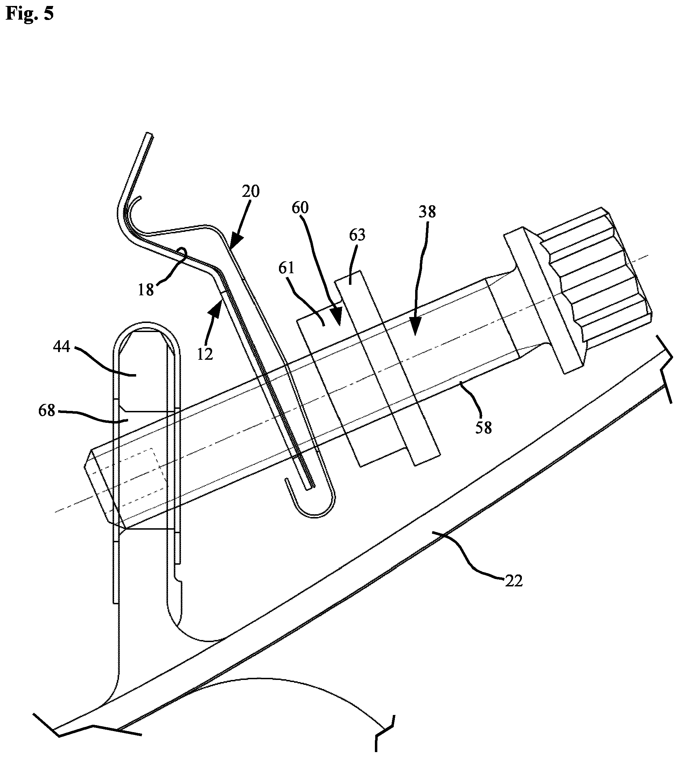

Die Schnittdarstellung der Fig. 5 zeigt das Einführen des Bolzens 38 in eine entsprechende Öffnung 68, die im Flanschabschnitt 44 des zweiten Bauteils 22 ausgebildet ist. In dieser Darstellung ist auch der Aufbau des Sicherungsabschnitts 60 mit dem Kopplungsabschnitt 61 und dem Halteabschnitt 63 besser erkennbar als in der Schnittdarstellung der Fig. 3. Die Öffnung 68 weist einen etwas größeren Durchmesser auf als der Schaft 58 des Bolzens 38. Hierdurch kann der Bolzen 38, wie in Fig. 5 dargestellt, in einer geneigten Stellung durch die Öffnung 68 eingeführt werden. Die Zentrierung des Bolzens 38 innerhalb der Öffnung 68 erfolgt durch das Aufschieben eines hülsenartigen Elements 48, wie dies in der Fig. 3 ersichtlich ist. Beim Einführen des Bolzens 38 ist dessen Schaft 58 bereits durch die Öffnung 32 des Dichtungselements 12 hindurch geführt, so dass der Einbau vereinfacht ist. Auch das optionale Federelement 20 kann beim Einführen des Bolzens 38 bereits mit dessen Schaft 58 in Verbindung stehen. Sobald der Bolzen 38 durch die Öffnung 68 hindurch eingeführt worden ist, stößt der Sicherungsabschnitt 60 mit seinem Kopplungsabschnitt 61 am ersten Flanschabschnitt 44 an, so dass ein weiteres Einführen des Bolzens 38 nicht mehr möglich ist. Anschließend kann durch Anbringen der weiteren aus der Fig. 3 ersichtlichen Bauteile, wie ringartige bzw. hülsenartige Elemente 38 und Mutter 46 die Verbindung endgültig hergestellt werden.

Der Vollständigkeit halber wird noch darauf hingewiesen dass in den Fig. 3 und 5 auch der weitere Dichtkörper 18 jeweils eingezeichnet ist. In der Fig. 4 ist der Dichtkörper 18 aus Gründen der vereinfachten Darstellung nicht gezeigt.

### Bezugszeichenliste

- 10: Dichtungsanordnung
- 12: Dichtungselement
- 14: Stoßstelle
- 16: Abstand
- 18: Dichtkörper
- 20: Federelement
- 22: zweites Bauteil
- 24: Heißgas führender Kanal
- 26: Überlappungsbereich
- 28: Überlappungsabschnitt
- 30: Überlappungsabschnitt
- 32: Öffnung (des Dichtungselements)
- 34: Öffnung (des Dichtkörpers)
- 36: Öffnung (des Federelements)
- 38: Bolzen
- 40: erstes Bauteil
- 42: erster Flanschabschnitt
- 44: zweiter Flanschabschnitt
- 46: Mutter
- 48: Ring-/hülsenartiges Element
- 50: Kopplungsabschnitt (des Dichtungselements)
- 52: erster Dichtungsabschnitt
- 54: zweiter Dichtungsabschnitt
- 56: Verrundungsabschnitt
- 57: Verbindungsabschnitt (des Dichtungselements)
- 58: Schaft (des Bolzens)
- 60: Sicherungsabschnitt
- 61: Kopplungsabschnitt (des Sicherungsabschnitts)
- 62: Druckabschnitt
- 63: Halteabschnitt (des Sicherungsabschnitts)
- 64: Verbindungsabschnitt
- 66: Stützabschnitt
- 67: Schenkel
- 68: Öffnung (des Flanschabschnitts 44)
- AB, ABn, ABx: Abstand
- AR: Axialrichtung
- RR: Radialrichtung
- UR: Umfangsrichtung

## Patentansprüche

1. Dichtungsanordnung (10) für eine Gasturbine, insbesondere Fluggasturbine, umfassend: ein erstes Bauteil (40) mit einem ersten Flanschabschnitt (42) und ein zweites Bauteil (22) mit einem zweiten Flanschabschnitt (44), wobei das erste Bauteil (40) und das zweite Bauteil (22) im Bereich des ersten Flanschabschnitts (42) und des zweiten Flanschabschnitts (44) mittels einer Schraubverbindung (38, 46) lösbar miteinander gekoppelt sind, wobei zwischen dem ersten Bauteil (40), insbesondere einem Verrundungsabschnitt (56), und dem zweiten Bauteil (22), insbesondere dem zweiten Flanschabschnitt (44), ein veränderlicher Abstand (AB, ABn, ABx) vorgesehen ist, der durch wenigstens ein Dichtungselement (12) wenigstens teilweise abgedichtet wird,
wobei das Dichtungselement (12) einen am ersten Bauteil (40), insbesondere am Verrundungsabschnitt (56) anliegenden ersten Dichtungsabschnitt (52) und einen am zweiten Bauteil (22), insbesondere am zweiten Flanschabschnitt (44) anliegenden zweiten Dichtungsabschnitt (54) aufweist, wobei der erste Dichtungsabschnitt (52) und der zweite Dichtungsabschnitt (54) miteinander verbunden sind und geneigt zueinander angeordnet sind, **dadurch gekennzeichnet, dass** das Dichtungselement (12) einen sich an den zweiten Dichtungsabschnitt (54) anschließenden Kopplungsabschnitt (50) aufweist, wobei im Kopplungsabschnitt (50) eine Öffnung (32) vorgesehen ist, durch die ein Schaft (58) eines Bolzens (38) der Schraubverbindung hindurchgeführt ist.

2. Dichtungsanordnung nach Anspruch 1, **dadurch gekennzeichnet, dass** das Dichtungselement (12) relativ zum ersten Bauteil (40) und relativ zum zweiten Bauteil (22) verschiebbar ist.

3. Dichtungsanordnung nach Anspruch 1 oder 2, **dadurch gekennzeichnet, dass** an dem Schaft (58) des Bolzens ein Sicherungsabschnitt (60) angeordnet ist, der einen größeren Durchmesser als der Schaft (58) aufweist, derart, dass eine Bewegung des Dichtungselements entlang der Längsrichtung des Schafts (38) nur eingeschränkt möglich ist.

4. Dichtungsanordnung nach nach einem der vorhergehenden Ansprüche, **dadurch gekennzeichnet, dass** die Öffnung (32) als Langloch ausgebildet ist.

5. Dichtungsanordnung nach Anspruch 4, **dadurch gekennzeichnet, dass** das Langloch derart bemessen ist, dass das Dichtungselement (12) in Abhängigkeit des veränderlichen Abstands (AB, ABn, ABx) zwischen dem ersten Bauteil (40), insbesondere dessen ersten Flanschabschnitt (42, 56) und dem zweiten Bauteil (22), insbesondere dessen zweiten Flanschabschnitt (44) verschiebbar ist.

6. Dichtungsanordnung nach einem der vorhergehenden Ansprüche, ferner umfassend ein Federelement (20), das dazu eingerichtet ist, den ersten Dichtungsabschnitt (52) und den zweiten Dichtungsabschnitt (54) in Richtung des ersten Flanschabschnitts (42, 56) und des zweiten Flanschabschnitts (44) zu drücken.

7. Dichtungsanordnung nach Anspruch 6 und wenigstens einem der Ansprüche 3 bis 6, **dadurch gekennzeichnet, dass** das Federelement (20) eine Öffnung (36) aufweist, insbesondere in Form eines Langlochs, durch die der Schaft (58) des Bolzens (38) der Schraubverbindung hindurchgeführt ist.

8. Dichtungsanordnung nach Anspruch 7, **dadurch gekennzeichnet, dass** das Federelement (20) zwischen einem Halteabschnitt (63) des Sicherungsabschnitts (60) des Schafts (58) und dem Dichtungselement (12) angeordnet ist.

9. Dichtunganordnung nach Anspruch 6 oder 7, **dadurch gekennzeichnet, dass** das Federelement (20) am ersten Flanschabschnitt (42, 56) oder am zweiten Flanschabschnitt (44) sowie am Halteabschnitt (63) des Sicherungsabschnitts (60) abgestützt ist.

10. Dichtungsanordnung nach einem der vorhergehenden Ansprüche, **dadurch gekennzeichnet, dass** der erste Dichtungsabschnitt (52) und der zweite Dichtungsabschnitt (54) im Wesentlichen V-förmig zueinander angeordnet sind, insbesondere einen Winkel bilden, der vorzugsweise zwischen etwa 60° und 120°, besonders bevorzugt etwa zwischen 80° und 110° liegt.

11. Dichtungsanordnung nach Anspruch 10, **dadurch gekennzeichnet, dass** der erste Dichtungsabschnitt (52) und der zweite Dichtungsabschnitt (54) durch einen gebogenen Verbindungsabschnitt (57) verbunden sind, wobei der Verbindungsabschnitt (57) in Richtung zu dem ersten Flanschabschnitt (42) oder dem zweiten Flanschabschnitt (44) hin konvex ausgebildet ist.

12. Gasturbine, insbesondere Fluggasturbine, mit einem Turbinenzwischengehäuse, **dadurch gekennzeichnet, dass** die Gasturbine entlang der Umfangsrichtung (UR) mehrere Dichtungsanordnungen (10) nach einem der vorhergehenden Ansprüche umfasst, wobei das erste Bauteil (40) einer Dichtungsanordnung (10) ein Gehäusebauteil ist und wobei das zweite Bauteil (22) der betreffenden Dichtungsanordnung (10) ein Teil des Turbinenzwischengehäuses ist, insbesondere ein Panel oder Fairing des Turbinenzwischengehäuses.

13. Gasturbine nach Anspruch 12, **dadurch gekennzeichnet, dass** in einem Übergangsbereich von jeweils zwei Dichtungsanordnungen (10), die in Umfangsrichtung (UR) benachbart zueinander angeordnet sind und im Bereich einer Überlappung von zwei benachbarten Bauteilen des Turbinenzwischengehäuses angeordnet sind, wenigstens ein weiteres Dichtungselement, insbesondere ein dem Profil des Dichtungselements (12) angepasster Dichtkörper (18) angeordnet ist.

14. Gasturbine nach Anspruch 13, **dadurch gekennzeichnet, dass** der Dichtkörper (18) und die betreffenden Dichtungselemente (12) der benachbarten Dichtungsanordnungen (10) in Axialrichtung (AR) wenigstens teilweise überlappend angeordnet sind.

## Claims

1. Sealing arrangement (10) for a gas turbine, in particular an aircraft gas turbine, comprising:
a first component (40) which has a first flange portion (42) and a second component (22) which has a second flange portion (44), the first component (40) and the second component (22) being releasably coupled to one another in the region of the first flange portion (42) and the second flange portion (44) by means of a screw connection (38, 46), a variable distance (AB, ABn, ABx) being provided between the first component (40), in particular a rounded portion (56), and the second component (22), in particular the second flange portion (44), which distance is at least partially sealed by at least one sealing element (12), the sealing element (12) having a first sealing portion (52) that rests against the first component (40), in particular against the rounded portion (56), and having a second sealing portion (54) that rests against the second component (22), in particular against the second flange portion (44), the first sealing portion (52) and the second sealing portion (54) being interconnected and arranged at an inclination with respect to one another, **characterized in that** the sealing element (12) has a coupling portion (50) which adjoins the second sealing portion (54), an opening (32) being provided in the coupling portion (50), through which opening a shank (58) of a bolt (38) of the screw connection is passed.

2. Sealing arrangement according to claim 1, **characterized in that**
the sealing element (12) is movable relative to the first component (40) and relative to the second component (22).

3. Sealing arrangement according to either claim 1 or claim 2, **characterized in that**
a securing portion (60) is arranged on the shank (58) of the bolt, which portion has a larger diameter than the shank (58), such that a movement of the sealing element in the longitudinal direction of the shank (38) is limited.

4. Sealing arrangement according to any of the preceding claims, **characterized in that**
the opening (32) is formed as a slot.

5. Sealing arrangement according to claim 4, **characterized in that**
the slot is dimensioned such that the sealing element (12) can be moved between the first component (40), in particular the first flange portion (42, 56) thereof, and the second component (22), in particular the second flange portion (44) thereof, depending on the variable distance (AB, ABn, ABx).

6. Sealing arrangement according to any of the preceding claims, further comprising a spring element (20) which is designed to press the first sealing portion (52) and the second sealing portion (54) toward the first flange portion (42, 56) and the second flange portion (44).

7. Sealing arrangement according to claim 6 and at least one of claims 3 to 6, **characterized in that**
the spring element (20) has an opening (36), in particular in the form of a slot, through which the shank (58) of the bolt (38) of the screw connection is passed.

8. Sealing arrangement according to claim 7, **characterized in that**
the spring element (20) is arranged between a retaining portion (63) of the securing portion (60) of the shank (58) and the sealing element (12).

9. Sealing arrangement according to either claim 6 or claim 7, **characterized in that**
the spring element (20) is supported on the first flange portion (42, 56) or on the second flange portion (44), and on the retaining portion (63) of the securing portion (60).

10. Sealing arrangement according to any of the preceding claims, **characterized in that**
the first sealing portion (52) and the second sealing portion (54) are arranged so as to be substantially in a V-shape relative to one another, and in particular form an angle which is preferably between approximately 60° and 120°, particularly preferably between approximately 80° and 110°.

11. Sealing arrangement according to claim 10, **characterized in that**
the first sealing portion (52) and the second sealing portion (54) are connected by a bent connecting portion (57), the connecting portion (57) being convex toward the first flange portion (42) or the second flange portion (44).

12. Gas turbine, in particular an aircraft gas turbine, comprising a turbine intermediate housing, **characterized in that** the gas turbine comprises a plurality of sealing arrangements (10) according to any of the preceding claims in the circumferential direction (UR), the first component (40) of a sealing arrangement (10) being a housing component and the second component (22) of the relevant sealing arrangement (10) being a part of the turbine intermediate housing, in particular a panel or fairing of the turbine intermediate housing.

13. Gas turbine according to claim 12, **characterized in that**
at least one further sealing element, in particular a sealing body (18) adapted to the profile of the sealing element (12), is arranged in a transition region of each two sealing arrangements (10), which are arranged adjacent to one another in the circumferential direction (UR) and are arranged in the region of an overlap of two adjacent components of the turbine intermediate housing.

14. Gas turbine according to claim 13, **characterized in that**
the sealing body (18) and the relevant sealing elements (12) of the adjacent sealing arrangements (10) are arranged in the axial direction (AR) so as to at least partially overlap.

## Revendications

1. Dispositif d'étanchéité (10) pour une turbine à gaz, en particulier une turbine à gaz d'avion, comprenant :
un premier composant (40) comportant une première partie de bride (42) et un second composant (22) comportant une seconde partie de bride (44), le premier composant (40) et le second composant (22) situés dans la région de la première partie de bride (42) et de la seconde partie de bride (44) étant couplés ensemble de manière amovible au moyen d'une liaison à vis (38, 46), un écartement variable (AB, ABn, ABx) étant prévu entre le premier composant (40), notamment une partie arrondie (56), et le second composant (22), notamment la seconde partie de bride (44), lequel écartement est au moins partiellement rendu étanche par au moins un élément d'étanchéité (12), l'élément d'étanchéité (12) présentant une première partie d'étanchéité (52) adjacente au premier composant (40), en particulier à la partie arrondie (56) et une seconde partie d'étanchéité (54) adjacente au second composant (22), en particulier à la seconde partie de bride (44), la première partie d'étanchéité (52) et la seconde partie d'étanchéité (54) étant reliées entre elles et disposées de manière inclinée l'une par rapport à l'autre, **caractérisé en ce que** l'élément d'étanchéité (12) présente une partie d'accouplement (50) adjacente à la seconde partie d'étanchéité (54), une ouverture (32) étant prévue dans la partie d'accouplement (50), ouverture à travers laquelle passe une tige (58) d'un boulon (38) de la liaison à vis.

2. Dispositif d'étanchéité selon la revendication 1, **caractérisé en ce que** l'élément d'étanchéité (12) est déplaçable par rapport au premier composant (40) et par rapport au second composant (22).

3. Dispositif d'étanchéité selon la revendication 1 ou 2, **caractérisé en ce qu'**une partie de fixation (60) est disposée sur la tige (58) du boulon, et présente un diamètre supérieur à celui de la tige (58), de sorte que l'élément d'étanchéité ne peut se déplacer que de façon limitée dans la direction longitudinale de la tige (38).

4. Dispositif d'étanchéité selon l'une des revendications précédentes, **caractérisé en ce que** l'ouverture (32) est conçue sous la forme d'un trou oblong.

5. Dispositif d'étanchéité selon la revendication 4, **caractérisé en ce que** le trou oblong est dimensionné de sorte que l'élément d'étanchéité (12) peut être déplacé, en fonction de l'écartement variable (AB, ABn, ABx), entre le premier composant (40), notamment sa première partie de bride (42, 56), et le second composant (22), notamment sa seconde partie de bride (44).

6. Dispositif d'étanchéité selon l'une des revendications précédentes, comprenant en outre un élément ressort (20) destiné à pousser la première partie d'étanchéité (52) et la seconde partie d'étanchéité (54) vers la première partie de bride (42, 56) et la seconde partie de bride (44).

7. Dispositif d'étanchéité selon la revendication 6 et au moins l'une des revendications 3 à 6, **caractérisé en ce que** l'élément ressort (20) présente une ouverture (36), notamment en forme d'un trou oblong, à travers laquelle passe la tige (58) du boulon (38) de la liaison à vis.

8. Dispositif d'étanchéité selon la revendication 7, **caractérisé en ce que** l'élément ressort (20) est disposé entre une partie de retenue (63) de la partie de fixation (60) de la tige (58) et l'élément d'étanchéité (12).

9. Procédé selon la revendication 6 ou 7, **caractérisé en ce que** l'élément ressort (20) est supporté sur la première partie de bride (42, 56) ou sur la seconde partie de bride (44) et sur la partie de retenue (63) de la partie de fixation (60).

10. Dispositif d'étanchéité selon l'une des revendications précédentes, **caractérisé en ce que** la première partie d'étanchéité (52) et la seconde partie d'étanchéité (54) sont disposées sensiblement en forme de V l'une par rapport à l'autre, formant en particulier un angle compris de préférence entre environ 60 et 120 °, de manière davantage préférée entre environ 80 et 110 °.

11. Dispositif d'étanchéité selon la revendication 10, **caractérisé en ce que** la première partie d'étanchéité (52) et la seconde partie d'étanchéité (54) sont reliées par une partie de liaison (57) pliée, ladite partie de liaison (57) étant convexe vers la première partie de bride (42) ou vers la seconde partie de bride (44).

12. Turbine à gaz, notamment turbine à gaz d'avion, comportant un carter intermédiaire de turbine, **caractérisée en ce que** la turbine à gaz comprend une pluralité de dispositifs d'étanchéité (10) selon l'une des revendications précédentes, dans la direction circonférentielle (UR), le premier composant (40) d'un dispositif d'étanchéité (10) étant un composant de carter et le second composant (22) du dispositif d'étanchéité respectif (10) étant une partie du carter intermédiaire de turbine, notamment un panneau ou carénage du carter intermédiaire de turbine.

13. Turbine à gaz selon la revendication 12, **caractérisée en ce qu'**au moins un autre élément d'étanchéité, notamment un corps d'étanchéité (18) adapté au profilé de l'élément d'étanchéité (12), est disposé dans une région de transition de deux dispositifs d'étanchéité (10) disposés de manière adjacente l'un par rapport à l'autre dans la direction circonférentielle (UR), et disposés dans la région d'un chevauchement de deux composants adjacents du carter intermédiaire de turbine.

14. Turbine à gaz selon la revendication 13, **caractérisée en ce que** le corps d'étanchéité (18) et les éléments d'étanchéité respectifs (12) des dispositifs d'étanchéité adjacents (10) sont disposés dans la direction axiale (AR) en chevauchement au moins partiel.
